# EUROPEAN PATENT APPLICATION

(11) **EP 4 794 208 A1**
(43) Date of publication of application: **19.08.2026**
(21) Application number: 24890108.4
(22) Date of filing: 25.06.2024
(51) Int. Cl.: H04B 1/38

(54) **RADIO FREQUENCY APPARATUS AND COMMUNICATION DEVICE**

(30) Priority: 14.11.2023 CN 202323080441 U
(71) Applicant: HUAWEI TECHNOLOGIES CO., LTD., Shenzhen 518129 (CN)
(72) Inventor: LIU, Haitao, Shenzhen, Guangdong 518129 (CN); QIN, Weixing, Shenzhen, Guangdong 518129 (CN); LU, Yandong, Shenzhen, Guangdong 518129 (CN)
(74) Representative: Isarpatent
(86) International application number: PCT/CN2024/101269
(87) International publication number: WO 2025/102739

(57) **Abstract**

Embodiments of this application provide a radio frequency apparatus and a communication device to meet low-insertion-loss performance requirements of the radio frequency apparatus. A low-pass filter circuit of the radio frequency apparatus is electrically connected between an input port and a second output port. A first resonance unit of a band-pass filter circuit includes a second capacitor and a first inductor. A first terminal of the second capacitor is electrically connected to the input port. A second terminal of the second capacitor is electrically connected to a first terminal of the first inductor. A second resonance unit of the band-pass filter circuit includes a third capacitor and a second inductor. A first terminal of the third capacitor is electrically connected to the first output port. A second terminal of the third capacitor is electrically connected to a first terminal of the second inductor. A second terminal of the second inductor is electrically connected to a second terminal of the first inductor. A first capacitor is electrically connected between the second terminal of the second capacitor and the second terminal of the third capacitor. The radio frequency apparatus in this application can reduce insertion loss, meeting low-insertion-loss performance requirements.

## Description

This application claims priority to Chinese Patent Application No. 202323080441.0, filed with the China National Intellectual Property Administration on November 14, 2023 and entitled "RADIO FREQUENCY APPARATUS AND COMMUNICATION DEVICE", which is incorporated herein by reference in its entirety.

### TECHNICAL FIELD

This application relates to the field of radio frequency communication technologies, and in particular, to a radio frequency apparatus and a communication device.

### BACKGROUND

In recent years, with rapid progress and wide application of wireless communication technologies, problems like complex electromagnetic environment become increasingly prominent. Therefore, radio frequency apparatuses become a type of irreplaceable frequencyselective components within communication devices by virtue of their advantages in suppressing interference between adjacent channels, reducing noise coefficients, and so on. However, the rapid development of wireless communication technologies also imposes increasingly strict requirements on communication devices and even internal radio frequency apparatuses. For example, the radio frequency apparatuses are required to have performance features of low insertion loss.

However, in related technologies, it is difficult for the radio frequency apparatuses to meet the foregoing requirements.

### SUMMARY

This application provides a radio frequency apparatus and a communication device to meet low-insertion-loss performance requirements of the radio frequency apparatus.

To achieve the foregoing objective, the following technical solutions are used in this application.

According to one aspect, a radio frequency apparatus is provided. The radio frequency apparatus includes a substrate and a band-pass filter circuit, a low-pass filter circuit, an input port, a first output port, and a second output port that are disposed on the substrate. The low-pass filter circuit is electrically connected between the input port and the second output port. The band-pass filter circuit includes: a first resonance unit, a second resonance unit, and a first capacitor. The first resonance unit includes a second capacitor and a first inductor, a first terminal of the second capacitor is electrically connected to the input port, and a second terminal of the second capacitor is electrically connected to a first terminal of the first inductor. The second resonance unit includes a third capacitor and a second inductor, a first terminal of the third capacitor is electrically connected to the first output port, a second terminal of the third capacitor is electrically connected to a first terminal of the second inductor, and a second terminal of the second inductor is electrically connected to a second terminal of the first inductor. The first capacitor is electrically connected between the second terminal of the second capacitor and the second terminal of the third capacitor.

According to the radio frequency apparatus provided in this application, when a radio frequency signal received by the input port passes through the low-pass filter circuit, a band that is in the radio frequency signal and that is higher than a low-pass target frequency is suppressed, and the radio frequency signal meeting the low-pass target frequency may pass through the low-pass filter circuit, and is transmitted to a subsequently connected radio frequency circuit through the second output port. When a radio frequency signal received by the input port passes through the band-pass filter circuit, radio frequency signals in a high frequency band and a low frequency band that are outside a band-pass target frequency band are all suppressed. A radio frequency signal that is obtained through filtering and that is in the band-pass target frequency band may pass through the band-pass filter circuit, and is transmitted to a subsequently connected radio frequency circuit through the first output port. Two transmission paths of the radio frequency apparatus separately filter a received radio frequency signal to obtain a radio frequency signal meeting a requirement and a target frequency band. The band-pass filter circuit is built from the first resonance unit, the second resonance unit, and the first capacitor. During operating, in addition to transmission zeros generated by filtering responses of the first resonance unit and the second resonance unit, a third transmission zero is generated by parallel resonance of the first capacitor. This enhances the capability of the band-pass filter circuit of filtering a high-order harmonic, thereby improving an in-band matching capability and an out-of-band suppression capability of the entire radio frequency apparatus, and endowing the radio frequency apparatus with a low-insertion-loss performance feature.

In some embodiments, the low-pass filter circuit and the band-pass filter circuit are sequentially arranged along a first direction, and a second direction intersects the first direction. The second capacitor, the first capacitor, and the third capacitor are sequentially disposed along the second direction.

The second capacitor, the first capacitor, and the third capacitor are used as a main structure of the band-pass filter circuit. By arranging layout positions of the second capacitor, the first capacitor, and the third capacitor, an overall layout area occupied by the band-pass filter circuit on the substrate can be controlled, and a size occupied by the band-pass filter circuit in the first direction can be shortened, improving utilization of a substrate area and implementing a miniaturization design of a circuit structure of the radio frequency apparatus.

In some embodiments, the first inductor and the second inductor are located on a side of the first capacitor close to the low-pass filter circuit.

In this way, a subsequently designed low-pass filter circuit, the first inductor, and the second inductor may be used to implement layout splicing, shortening spacing between circuit structures in the radio frequency apparatus, further reducing sizes of the circuit structures in the radio frequency apparatus, and implementing a miniaturization design.

In addition, the second capacitor, the first capacitor, and the third capacitor are connected in series to form an overall layout on a side far away from the low-pass filter circuit, so that an edge shape of the radio frequency apparatus can be regularized, avoiding a waste of a layout area caused by irregular shapes of the first inductor and the second inductor, and improving utilization of the substrate area.

In some embodiments, the band-pass filter circuit further includes a first matching network and a second matching network. The first matching network is electrically connected between the input port and the first terminal of the second capacitor. The second matching network is electrically connected between the second terminal of the third capacitor and the first output port. The first matching network and the second matching network each include a rectangular conductor block, a width of the first matching network in the first direction is less than a width of the first matching network in the second direction, and a width of the second matching network in the first direction is greater than a width of the second matching network in the second direction. The first direction is an arrangement direction of the low-pass filter circuit and the band-pass filter circuit, and the second direction intersects the first direction.

In this way, the first matching network and the second matching network can implement impedance matching between the band-pass filter circuit and an external component, improving high-frequency matching performance of the band-pass filter circuit. In addition, a matching circuit does not need to be additionally designed for the band-pass filter circuit, and the first matching network and the second matching network of relatively small sizes are used, so that a size of the band-pass filter circuit can be reduced, a circuit loss caused by the matching circuit can be reduced, and a low insertion loss of the radio frequency apparatus can be implemented.

In some embodiments, the low-pass filter circuit includes: a third resonance unit, a fourth resonance unit, a fifth resonance unit, a third inductor, a fourth inductor, and a fifth inductor. A first terminal of the third inductor is electrically connected to the input port, and a second terminal of the third inductor is electrically connected to a first terminal of the fourth inductor. A second terminal of the fourth inductor is electrically connected to a first terminal of the fifth inductor, and a second terminal of the fifth inductor is electrically connected to the second output port. The third resonance unit is electrically connected to the second terminal of the third inductor. The fourth resonance unit is electrically connected to the second terminal of the fourth inductor. The fifth resonance unit is electrically connected to the second terminal of the fifth inductor.

The third inductor, the fourth inductor, and the fifth inductor are sequentially connected in series between the input port and the second output port. When the low-pass filter circuit works, a low-pass response may be generated to suppress a radio frequency signal of a high frequency band. In addition, the third resonance unit, the fourth resonance unit, and the fifth resonance unit may generate three out-of-band transmission zeros to suppress a second harmonic and a third harmonic, improving accuracy of a radio frequency signal of a low-frequency band obtained by the low-pass filter circuit through filtering, and further improving frequency selection accuracy of the radio frequency apparatus.

In some embodiments, the low-pass filter circuit and the band-pass filter circuit are sequentially arranged along the first direction, and the second direction intersects the first direction. The third inductor, the fourth inductor, and the fifth inductor are sequentially disposed along the second direction, and the fifth inductor and the fifth resonance unit are located on a same side of the fourth inductor.

In this way, when the low-pass filter circuit is designed, a size of the low-pass filter circuit in the second direction may be adjusted by adjusting layout positions of the third inductor, the fourth inductor, and the fifth inductor, so that the size of the low-pass filter circuit in the second direction is controlled while a size of the low-pass filter circuit in the first direction is reduced, improving utilization of a layout area of the substrate.

Secondly, the fifth inductor and the fifth resonance unit are disposed on a same side of the fourth inductor, so that an area occupied by a whole formed by the fifth inductor and the fifth resonance unit on the substrate can be reduced, and the circuit size of the low-pass filter circuit is further reduced, implementing a miniaturization design of the radio frequency apparatus.

In some embodiments, the fifth inductor includes a first sub-inductor and a second sub-inductor. The first sub-inductor extends along the first direction, one terminal of the first sub-inductor is connected to the second terminal of the fourth inductor, the second sub-inductor extends along the second direction, one terminal of the second sub-inductor is connected to the other terminal of the first sub-inductor, and the other terminal of the second sub-inductor is connected to the second output port. The first sub-inductor and the second sub-inductor enclose a first region, and at least a part of the fifth resonance unit is located in the first region.

Such arrangement may facilitate the first sub-inductor and the second sub-inductor to enclose the first region, and at least a part of the fifth resonance unit is embedded in the first region, reducing a layout area occupied by the fifth inductor and the fifth resonance unit, improving utilization of the substrate area, and further reducing the circuit size of the low-pass filter circuit.

In some embodiments, the third inductor includes a third sub-inductor and a fourth sub-inductor. The third sub-inductor extends along the first direction, and one terminal of the third sub-inductor is connected to the input port. The fourth sub-inductor extends along the second direction, one terminal of the fourth sub-inductor is connected to the other terminal of the third sub-inductor, and the other terminal of the fourth sub-inductor is connected to the first terminal of the fourth inductor. The third sub-inductor, the fourth inductor, and the first sub-inductor are sequentially disposed along the first direction.

In this way, space for splicing the fourth inductor and the first inductor in the first direction is provided by using the third sub-inductor, so that a distance between the fourth inductor and the first inductor can be shortened, reducing a layout area occupied by the fourth inductor and the first inductor that are combined, and further improving utilization of the substrate area.

In some embodiments, the fifth inductor, the third resonance unit, and the second resonance unit are sequentially disposed along the first direction.

In this way, an increase in a size of the low-pass filter circuit in the second direction can be avoided, so that the size of the low-pass filter circuit in the second direction adapts to a size of the band-pass filter circuit in the second direction, avoiding an increase in a size of the entire radio frequency apparatus in the second direction.

In some embodiments, the first resonance unit and the second resonance unit are sequentially disposed along the second direction. The third inductor and the fourth inductor are located between the first resonance unit and the band-pass filter circuit.

In this way, an overall size of the third resonance unit and the fourth resonance unit in the first direction can be shortened, reducing the size of the low-pass filter circuit in the first direction, further reducing the size of the radio frequency apparatus, and implementing a miniaturization and integration design of the radio frequency apparatus.

According to another aspect, a communication device is provided. The communication device includes: the radio frequency apparatus described above and a mainboard. The mainboard is connected to the radio frequency apparatus. The communication device provided in this embodiment of this application includes the radio frequency apparatus described above, and therefore has all the beneficial effects described above. Details are not described herein again.

### BRIEF DESCRIPTION OF DRAWINGS

FIG. 1 is a diagram of a structure of a communication device according to some embodiments of this application;
FIG. 2 is a block diagram of a structure of a filter according to some embodiments of this application;
FIG. 3 is a diagram of a structure of a radio frequency apparatus in a related technology according to some embodiments of this application;
FIG. 4 is a diagram of a structure of a filter in a related technology according to some embodiments of this application;
FIG. 5 is a diagram of a structure of a radio frequency apparatus according to some embodiments of this application;
FIG. 6 is a diagram of a circuit topology of a radio frequency apparatus according to some embodiments of this application;
FIG. 7 is a diagram of a structure of another radio frequency apparatus according to some embodiments of this application;
FIG. 8 is a diagram of a circuit topology structure of another radio frequency apparatus according to some embodiments of this application;
FIG. 9 is a diagram of a structure of still another radio frequency apparatus according to some embodiments of this application;
FIG. 10 is a test curve diagram of a band-pass filter circuit in a radio frequency apparatus according to some embodiments of this application; and
FIG. 11 is a test curve diagram of a low-pass filter circuit in a radio frequency apparatus according to some embodiments of this application.

### DESCRIPTION OF EMBODIMENTS

The following clearly and completely describes technical solutions in some embodiments of this application with reference to the accompanying drawings. It is clear that the described embodiments are merely some rather than all embodiments of this application. All other embodiments obtained by a person of ordinary skill in the art based on embodiments of this application shall fall within the protection scope of this application.

The terms such as "first" and "second" below are merely for convenience of description, and shall not be understood as an indication or implication of relative importance or implicit indication of a quantity of indicated technical features. Therefore, a feature defined by "first", "second", or the like may explicitly or implicitly include one or more features. In the descriptions of this application, unless otherwise stated, "a plurality of" means two or more than two.

Unless otherwise required by the context, throughout the specification and claims, the term "include" is interpreted as "open and inclusive", that is, "include but not limited to". In the descriptions of this specification, terms such as "an embodiment", "some embodiments", "example embodiments", "examples", or "some examples" are intended to indicate that specific characteristics, structures, materials, or features related to embodiments or examples are included in at least one embodiment or example of this application. The foregoing schematic representations of the terms do not necessarily refer to a same embodiment or example. In addition, the particular feature, structure, material, or characteristic may be included in any one or more embodiments or examples in any appropriate manner.

Example implementations are described herein with reference to a sectional view and/or a plane view of the accompanying drawings as idealized example drawings. In the accompanying drawings, for clarity, thicknesses of layers and regions are increased. Therefore, a change in a shape in the accompanying drawings due to, for example, manufacturing techniques and/or tolerances may be envisaged. Therefore, example implementations should not be explained as being limited to a shape of a region shown herein, but include shape deviations caused due to, for example, manufacturing. For example, an etching region shown as a rectangle usually has a bending characteristic. Therefore, the regions shown in the accompanying drawings are essentially examples, and their shapes are not intended to show actual shapes of regions of a device, and are not intended to limit a scope of the example implementations.

The term "example" or "for example" in embodiments of this application means "used as an example, an illustration, or a description". Any embodiment or design solution described as "example" or "for example" in embodiments of this application should not be explained as being more preferred or advantageous over other embodiments or design solutions. Exactly, use of the term such as "example" or "for example" is intended to present a relative concept in a specific manner.

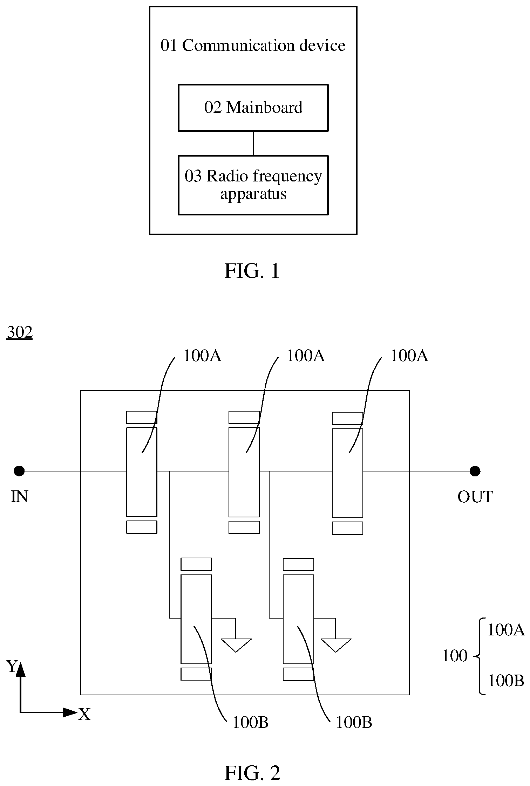

FIG. 1 is a diagram of a structure of a communication device 01 according to an embodiment of this application.

Refer to FIG. 1. An embodiment of this application provides a communication device 01. The communication device 01 may be a terminal product such as a mobile phone, a tablet computer, or an unmanned aerial vehicle; or the communication device 01 may be a communication device such as a base station, a routing device, a server, or a vehicle-mounted device.

As shown in FIG. 1, the communication device 01 may include a mainboard 02 and a radio frequency apparatus 03. The mainboard 02 is electrically connected to the radio frequency apparatus 03.

The mainboard 02 may include: a circuit board, and at least one memory and at least one processor that are disposed on the circuit board. The memory may also be referred to as a storage medium, a storage device, or the like, and is configured to store a software program. The processor is configured to read and execute the software program in the memory. In a feasible implementation, the memory may be disposed independently of the processor. In another feasible implementation, the memory may alternatively be integrated with the processor.

The radio frequency apparatus 03 may be installed on the mainboard 02, and is connected to the processor on the mainboard 02. The radio frequency apparatus 03 is configured to receive and send a radio frequency signal. The radio frequency (Radio Frequency, RF) signal includes an electrical signal having a particular frequency. Generally, the radio frequency signal may include a receive signal and a transmit signal. The receive signal may be referred to as an R_{X} (Receive) signal, and the transmit signal may be referred to as a T_{X} (Transport) signal.

In this embodiment of this application, the radio frequency apparatus 03 may be a duplexer. The duplexer has functions such as suppressing interference between adjacent channels and reducing a noise coefficient. Performance of the duplexer may directly affect performance of the radio frequency apparatus 03 and even performance of the entire communication device. In terms of structure, the duplexer is a three-port radio frequency component formed by a combination of two filters, so that a transceiver system can share one antenna, reducing apparatus complexity and saving space. The filter, as a basic component unit of the duplexer, is an apparatus having a frequency selection function. Therefore, each channel of the duplexer has a relatively high frequency selection characteristic.

FIG. 2 is a block diagram of a structure of a filter 302 according to some embodiments of this application.

Refer to FIG. 2. The filter 302 may include at least one first resonator 100A and at least one second resonator 100B. The filter 302 may further include an input port IN, an output port OUT, and a ground terminal. The at least one first resonator 100A may be electrically connected in series between the input port IN and the output port OUT, and the second resonator 100B may be electrically connected between the first resonator 100A and the ground terminal. The filter 302 forms a first band-stop by disposing a plurality of first resonators 100A, and the filter 302 forms a second band-stop by disposing a plurality of second resonators 100B. Based on the foregoing disposition, the filter 302 has corresponding band-pass to enable pass-through of a signal in a corresponding frequency band.

For example, the filter 302 shown in FIG. 2 may include three first resonators 100A and two second resonators 100B. Certainly, in another embodiment, a quantity of first resonators 100A and a quantity of second resonators 100B in the filter 302 may be correspondingly set based on an actual requirement.

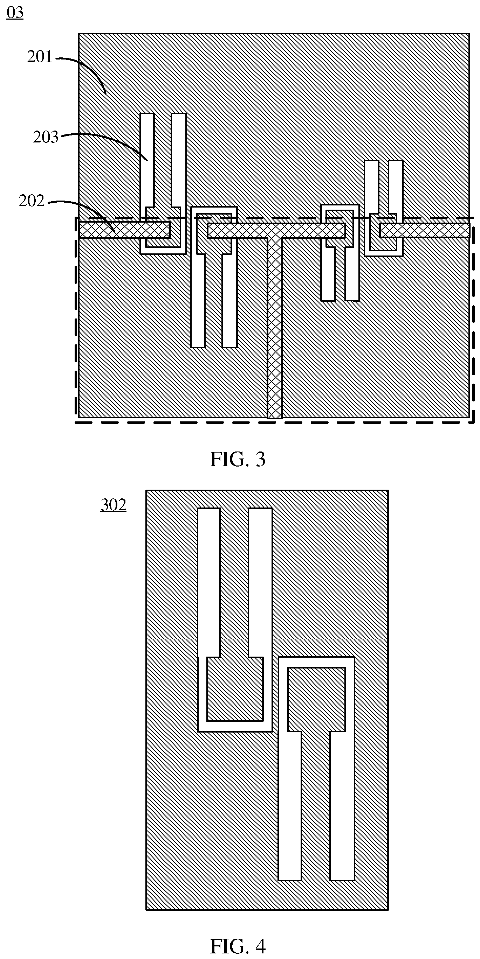

FIG. 3 is a diagram of a structure of a radio frequency apparatus 03 in a related technology according to some embodiments of this application. FIG. 4 is a diagram of a structure of a filter 302 in a related technology according to some embodiments of this application.

In a related technology, refer to FIG. 3 and FIG. 4. A groove 203 is opened on a ground conductor of a first layer 201 to form two filters 302 and further form a duplexer of a stepped impedance resonator. Further, a T-shaped microstrip and a straight-line microstrip are designed at a second layer 202. The T-shaped microstrip is used as a shared input port, and the straight-line microstrip is used as an output port of different upper and lower layer structures. The grooved duplexer may feed signal energy into a port in a vertical coupling manner. However, such a coupling manner has a large insertion loss, and an overall size of a formed radio frequency apparatus is large.

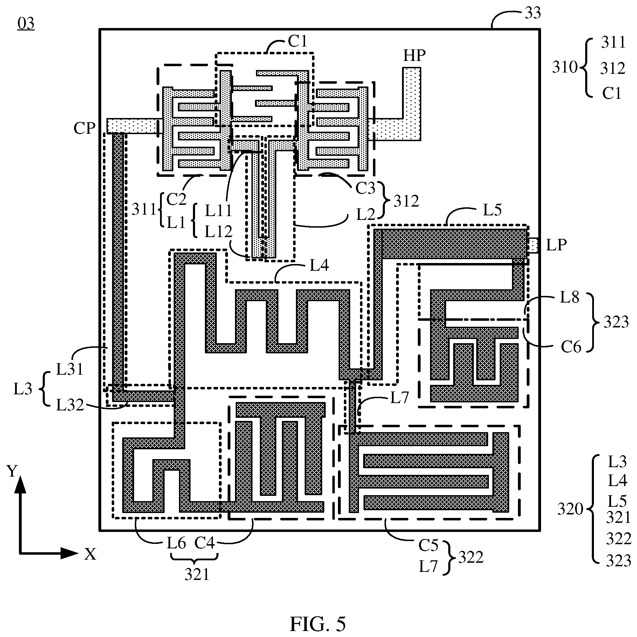

FIG. 5 is a diagram of a structure of a radio frequency apparatus 03 according to some embodiments of this application.

Refer to FIG. 5. In some embodiments, the radio frequency apparatus 03 includes: a substrate 33 and a band-pass filter circuit 310, a low-pass filter circuit 320, an input port CP, a first output port HP, and a second output port LP that are disposed on the substrate 33. The low-pass filter circuit 320 is electrically connected between the input port and the second output port. The band-pass filter circuit 310 includes: a first resonance unit 311, a second resonance unit 312, and a first capacitor C1. The first resonance unit 311 includes a second capacitor C2 and a first inductor L1, a first terminal of the second capacitor C2 is electrically connected to the input port CP, and a second terminal of the second capacitor C2 is electrically connected to a first terminal of the first inductor L1. The second resonance unit 312 includes a third capacitor C3 and a second inductor L2, a first terminal of the third capacitor C3 is electrically connected to the first output port HP, a second terminal of the third capacitor C3 is electrically connected to a first terminal of the second inductor L2, and a second terminal of the second inductor L2 is electrically connected to a second terminal of the first inductor L1. The first capacitor C1 is electrically connected between the second terminal of the second capacitor C2 and the second terminal of the third capacitor C3.

In some examples, the radio frequency apparatus 03 may be but not limited to a duplexer, a radio frequency module, or a circuit component in another radio frequency circuit.

Refer to FIG. 5. The radio frequency apparatus 03 may be three-terminal component, including an input port CP, a first output port HP, and a second output port LP.

When working, the radio frequency apparatus 03 receives a radio frequency signal by using the input port CP. When the received radio frequency signal passes through the low-pass filter circuit 320, the radio frequency signal higher than a low-pass target frequency is suppressed by the low-pass filter circuit 320, and the radio frequency signal that is obtained after filtering and that meets the low-pass target frequency passes through the low-pass filter circuit 320, and is transmitted to a subsequently connected radio frequency circuit through the second output port LP.

On a side of the band-pass filter circuit 310, when the radio frequency signal passes through the band-pass filter circuit 310, radio frequency signals outside the band-pass target frequency band are all suppressed by the band-pass filter circuit 310. A radio frequency signal that is obtained after filtering and that is in a band-pass target frequency band may pass through the band-pass filter circuit 310, and is transmitted to a subsequently connected radio frequency circuit through the first output port HP.

In some other embodiments, the input port CP receives a radio frequency signal from an antenna, that is, the antenna is connected to a duplexer by using the input port CP. The antenna may send radio signals of different frequencies to another communication apparatus, or receive radio signals from another communication apparatus. Therefore, the radio frequency apparatus 03 in this embodiment of this application may be used in a transmit frequency band, or may be used in a receive frequency band. The radio frequency apparatus 03 may suppress each frequency in the receive frequency band or the transmit frequency band, that is, perform filtering processing on a radio frequency signal in the receive frequency band or the transmit frequency band.

Target frequency bands of the low-pass filter circuit 320 and the band-pass filter circuit 310 may be set as required.

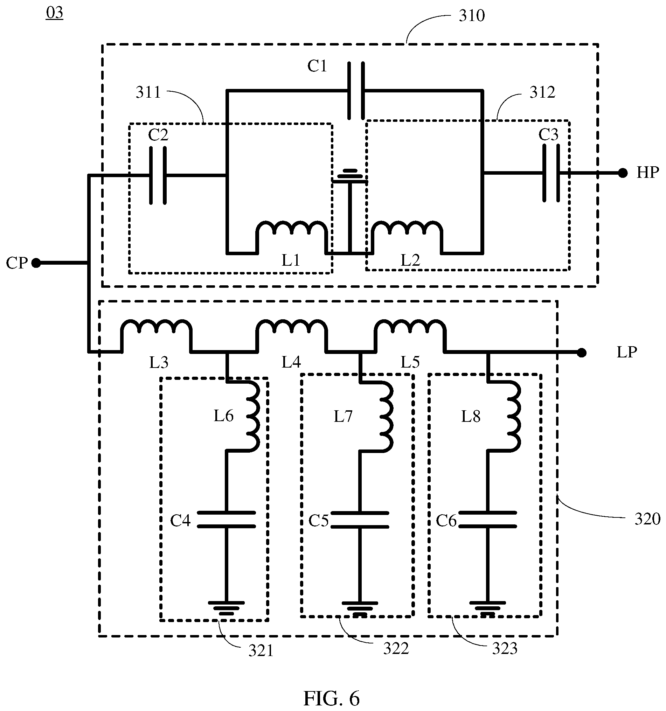

FIG. 6 is a diagram of a circuit topology of a radio frequency apparatus 03 according to some embodiments of this application.

Refer to FIG. 6. In some embodiments, a topology structure of the band-pass filter circuit 310 includes: a first capacitor C1, a second capacitor C2, a third capacitor C3, a first inductor L1, and a second inductor L2. For example, the second capacitor C2 and the first inductor L1 form a first resonance unit 311, and a second terminal of the first inductor L1 is grounded; and the third capacitor C3 and the second inductor L2 form a second resonance unit 312, and a second terminal of the second inductor L2 is grounded. After being connected in series, the first inductor L1 and the second inductor L2 are integrally connected in parallel to the first capacitor C1. In this case, the parallel resonance of the first capacitor C1 may generate a transmission zero, suppressing a high-frequency harmonic.

Second, when the band-pass filter circuit 310 works, the first resonance unit 311 and the second resonance unit 312 form a second-order band-pass filter passband, and a filtering response generated by a circuit has two other transmission zeros, to be specific, the second capacitor C2 and the first inductor L1 control a first transmission zero, and the third capacitor C3 and the second inductor L2 control the second transmission zero. The band-pass filter circuit 310 may generate three transmission zeros to generate a very strong suppression capability for a radio frequency signal outside a target frequency band, that is, improve an out-of-band suppression capability of the band-pass filter circuit 310, further improving an out-of-band suppression capability of the entire radio frequency apparatus 03.

In some examples, a strip conductor may be welded on a substrate 33 in a manner of a printed circuit board to form a microstrip structure, and the strip conductor may include a metal transmission line and the like. In this embodiment of this application, the radio frequency apparatus 03 may use the foregoing microstrip structure. In this way, production costs of the radio frequency apparatus 03 can be reduced.

For example, the first capacitor C1, the second capacitor C2, and the third capacitor C3 may all be planar interdigital capacitors, and both the first inductor L1 and the second inductor L2 may be planar bent inductors. The interdigital capacitor is a capacitor formed by using a microstrip, and the bent inductor is an inductor formed by bending a high-impedance metal wire. The high-impedance metal wire has a narrow line width, so that an impedance loss can be reduced while frequency band selectivity of the inductor is improved.

In addition, a circuit structure of the band-pass filter circuit 310 is designed by using an interdigital capacitor and a bent inductor, so that a size of the band-pass filter circuit 310 can be greatly reduced, further reducing a circuit size of the radio frequency apparatus 03.

Still refer to FIG. 5. In some embodiments, the low-pass filter circuit 320 and the band-pass filter circuit 310 are sequentially arranged along a first direction Y, and a second direction X intersects the first direction Y. The second capacitor C2, the first capacitor C1, and the third capacitor C3 are sequentially disposed along the second direction X.

In some examples, the first direction Y may be perpendicular to the second direction X.

In some other examples, an included angle between the first direction Y and the second direction X may be 30°, 45°, 60°, or the like.

For example, the planar interdigital capacitor includes two electrodes disposed in parallel and a rectangular interdigital structure located between the two electrodes. In the circuit layout design in this embodiment of this application, the second capacitor C2, the first capacitor C1, and the third capacitor C3 are sequentially disposed along the second direction X, and two adjacent capacitors share a same electrode. For example, an electrode close to the output port CP in the first capacitor C1 is used as an electrode of the second capacitor C2. For another example, an electrode far away from the output port CP in the first capacitor C1 is used as an electrode of the third capacitor C3.

Such arrangement helps reduce a quantity of electrodes, and further shortens spacing between the second capacitor C2, the first capacitor C1, and the third capacitor C3, shortening a width of the band-pass filter circuit 310 in the second direction X, and further helping reduce a size of the radio frequency apparatus 03 in the second direction X, so that miniaturization and integration of the radio frequency apparatus 03 can be implemented. In addition, the second capacitor C2, the first capacitor C1, and the third capacitor C3 are used as a main structure of the band-pass filter circuit 310. By arranging layout positions of the second capacitor C2, the first capacitor C1, and the third capacitor C3, an overall footprint of the band-pass filter circuit 310 on the substrate 33 can be controlled, facilitating a miniaturization design of a circuit structure of the radio frequency apparatus 03.

Still refer to FIG. 5. In some embodiments, the first inductor L1 and the second inductor L2 are located on a side of the first capacitor C1 close to the low-pass filter circuit 320.

In some examples, the second capacitor C2, the first capacitor C1, and the third capacitor C3 are connected in series to form an overall layout on a side far away from the low-pass filter circuit 320, so that an edge shape of the radio frequency apparatus 03 can be regularized, avoiding a waste of a layout area caused by irregular shapes of the first inductor L1 and the second inductor L2, or avoiding an increase in a size of the entire radio frequency apparatus 03 caused by irregular shapes of the first inductor L1 and the second inductor L2.

In this way, a subsequently designed low-pass filter circuit 320, the first inductor L1, and the second inductor L2 may be used to perform layout splicing, shortening spacing between circuit structures in the radio frequency apparatus 03, further reducing sizes of the circuit structures in the radio frequency apparatus 03, and implementing a miniaturization design of the radio frequency apparatus 03.

Certainly, in some other embodiments, the first inductor L1 and the second inductor L2 may be located on a side of the first capacitor C1 far away from the low-pass filter circuit 320.

In some other examples, refer to the diagram of the structure shown in FIG. 5, the first resonance unit 311 and the second resonance unit 312 are symmetrically distributed. Therefore, the first inductor L1 and the second inductor L2 inside the two resonance units are also symmetrically designed in terms of structure. The following uses the first inductor L1 as an example for description.

The first inductor L1 includes a fifth sub-inductor L11 and a sixth sub-inductor L12. A first terminal of the fifth sub-inductor L11 is electrically connected to a second terminal of the second capacitor C2, a second terminal of the fifth sub-inductor L11 is connected to a first terminal of the sixth sub-inductor L12, and a second terminal of the sixth sub-inductor L12 is grounded. Both the fifth sub-inductor L11 and the sixth sub-inductor L12 may be metal wires, the fifth sub-inductor L11 extends along the second direction X, and the sixth sub-inductor L12 extends along the first direction Y. By arranging layout positions of the fifth sub-inductor L11 and the sixth sub-inductor L12, a bending operation of the first inductor L1 can be implemented, so that the first inductor L1 adapts to a size of the first capacitor C1 in the second direction X, and a size of the first inductor L1 in the second direction X is reduced, helping reduce a size of the band-pass filter circuit 310, and implementing a miniaturization and integration design of the radio frequency apparatus 03.

Because the first inductor L1 and the second inductor L2 are symmetrically designed in terms of structure, the second inductor L2 is not described in detail herein. The band-pass filter circuit 310 uses symmetric distribution in terms of layout design, so that layout of the circuit can be regularized, facilitating subsequent layout of the circuit structure on the substrate 33, further improving utilization of the area of the substrate 33, and helping properly plan layout distribution to implement a size miniaturization design.

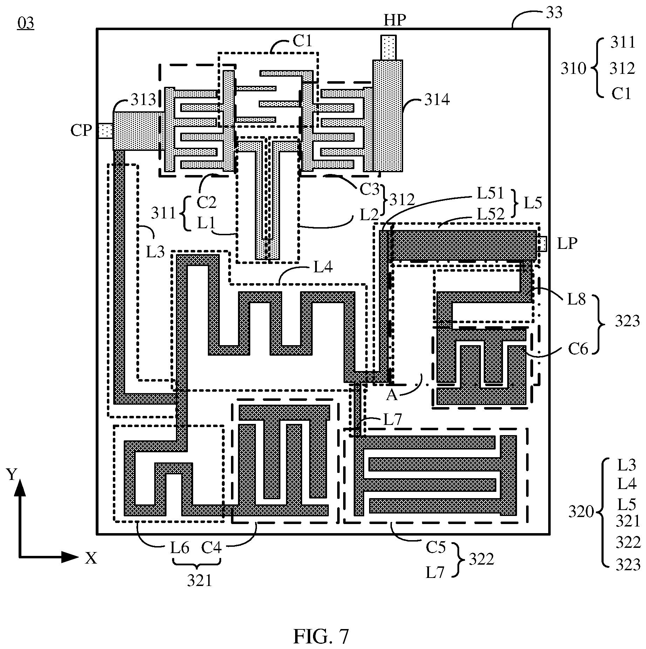

FIG. 7 is a diagram of a structure of another radio frequency apparatus 03 according to some embodiments of this application.

Refer to FIG. 7. In some embodiments, the band-pass filter circuit 310 further includes a first matching network 313 and a second matching network 314. The first matching network 313 is electrically connected between the input port CP and the first terminal of the second capacitor C2. The second matching network 314 is electrically connected between the second terminal of the third capacitor C3 and the first output port HP. The first matching network 313 and the second matching network 314 each include a rectangular conductor block. The first direction Y is an arrangement direction of the band-pass filter circuit 310 and the low-pass filter circuit 320, and the second direction X intersects the first direction Y.

In some examples, the first matching network 313 and the second matching network 314 are respectively disposed at the input port CP and the first output port HP as transition structures for connecting the band-pass filter circuit 310 to an external component, so that impedance matching between the band-pass filter circuit 310 and the external component can be implemented. The external component may include: an antenna, a coplanar waveguide, another radio frequency circuit, or the like. For example, if an antenna impedance externally connected to the input port is Z₁, and an internal impedance of the band-pass filter circuit 310 is Z₂, an impedance Z₃ of the first matching network 313 meets the following impedance matching formula during design: Z₃² = Z₁Z₂. A design principle of impedance matching of the second matching network 314 is the same as that of the first matching network 313, and details are not described herein again.

By disposing the first matching network 313 and the second matching network 314, impedance matching between the input port CP and the first output port HP and the external circuit can be implemented, reducing signal reflection that occurs when a radio frequency signal enters or is output from the band-pass filter circuit 310, further reducing attenuation of the radio frequency signal, and improving high-frequency matching performance of the band-pass filter circuit 310.

For example, the first matching network 313 and the second matching network 314 may be rectangular metal blocks. The first matching network 313 extends along the second direction X, and a width *w*1 of the first matching network 313 in the first direction Y is less than a width *l*1 in the second direction X. The second matching network 314 extends along the first direction Y, and a width *l*2 of the second matching network 314 in the first direction Y is greater than a width *w*2 in the second direction X. When the band-pass filter circuit 310 works, by adjusting lengths and widths of the first matching network 313 and the second matching network 314, impedance matching performance of the input port CP and the first output port HP of the radio frequency apparatus 03 and the external component can be adjusted, improving impedance matching performance of the radio frequency apparatus 03.

In this way, a matching circuit does not need be additionally designed for the band-pass filter circuit 310. An area occupied by the matching circuit on the substrate 33 is greater than that of the matching network. For example, the matching circuit may include centralized elements such as an inductor and a capacitor. Therefore, by using the first matching network 313 and the second matching network 314, an area occupied by the band-pass filter circuit 310 on the substrate 33 can be reduced, and a miniaturization and integration design of the radio frequency apparatus 03 can further be implemented. In addition, removing the matching circuit may further avoid a loss generated by the matching circuit, so that a loss generated by the band-pass filter circuit 310 can be reduced.

Still refer to FIG. 7. In some embodiments, the low-pass filter circuit 320 includes: a third resonance unit 321, a fourth resonance unit 322, a fifth resonance unit 323, a third inductor L3, a fourth inductor L4, and a fifth inductor L5. A first terminal of the third inductor L3 is electrically connected to the input port CP, and a second terminal of the third inductor L3 is electrically connected to a first terminal of the fourth inductor L4. A second terminal of the fourth inductor L4 is electrically connected to a first terminal of the fifth inductor L5, and a second terminal of the fifth inductor L5 is electrically connected to the second output port LP. The third resonance unit 321 is electrically connected to the second terminal of the third inductor L3. The fourth resonance unit 322 is electrically connected to the second terminal of the fourth inductor L4. The fifth resonance unit 323 is electrically connected to the second terminal of the fifth inductor L5.

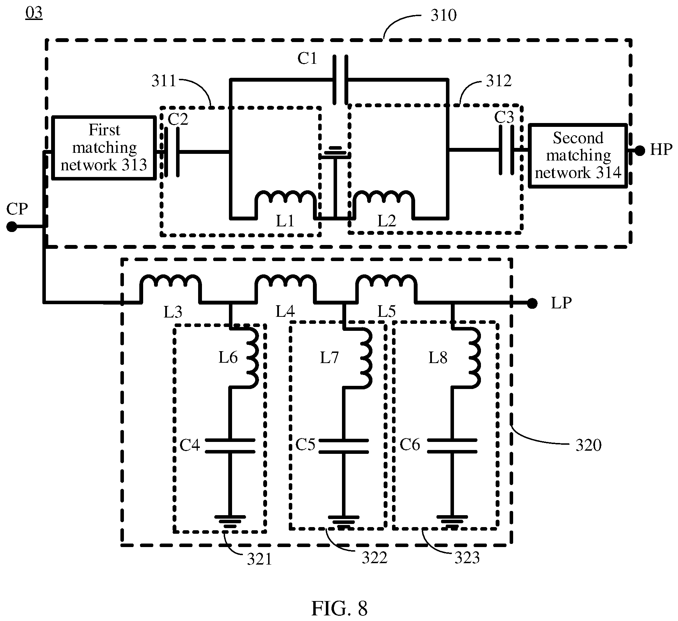

FIG. 8 is a diagram of a circuit topology structure of another radio frequency apparatus 03 according to some embodiments of this application.

In some examples, refer to FIG. 8. The third inductor L3, the fourth inductor L4, and the fifth inductor L5 of the low-pass filter circuit 320 are sequentially connected in series between the input port CP and the second output port LP. When the low-pass filter circuit 320 works, a low-pass response may be generated to suppress a radio frequency signal of a high frequency band.

In addition, the third resonance unit 321, the fourth resonance unit 322, and the fifth resonance unit 323 are all LC series-grounded resonators. When the low-pass filter circuit 320 works, a second harmonic and a third harmonic can be suppressed, improving accuracy of a low-frequency band radio frequency signal obtained by the low-pass filter circuit 320 through filtering.

Still refer to FIG. 8. The third resonance unit 321 includes a fourth capacitor C4 and a sixth inductor L6, a first terminal of the fourth capacitor C4 is electrically connected to the second terminal of the third inductor L3, a second terminal of the fourth capacitor C4 is connected to a first terminal of the sixth inductor L6, and a second terminal of the sixth inductor L6 is grounded. The fourth resonance unit 322 includes a fifth capacitor C5 and a seventh inductor L7, a first terminal of the fifth capacitor C5 is electrically connected to the second terminal of the fourth inductor L4, a second terminal of the fifth capacitor C5 is connected to a first terminal of the seventh inductor L7, and a second terminal of the seventh inductor L7 is grounded. The fifth resonance unit 323 includes a sixth capacitor C6 and an eighth inductor L8, a first terminal of the sixth capacitor C6 is electrically connected to the second terminal of the fifth inductor L5, a second terminal of the sixth capacitor C6 is connected to a first terminal of the eighth inductor L8, and a second terminal of the eighth inductor L8 is grounded.

By disposing the third resonance unit 321, the fourth resonance unit 322, and the fifth resonance unit 323, when the low-pass filter circuit 320 works, a generated filtering response has three out-of-band transmission zeros, to be specific, the fourth capacitor C4 and the sixth inductor L6 control a fourth transmission zero, the fifth capacitor C5 and the seventh inductor L7 control a fifth transmission zero, and the sixth capacitor C6 and the eighth inductor L8 control a sixth transmission zero, so that the low-pass filter circuit 320 has a very strong suppression capability for the second harmonic and the third harmonic, helping improve frequency selection accuracy of the radio frequency apparatus 03.

The fourth capacitor C4, the fifth capacitor C5, and the sixth capacitor C6 of the low-pass filter circuit 320 may all be planar interdigital capacitors. The third inductor L3, the fourth inductor L4, the fifth inductor L5, the sixth inductor L6, the seventh inductor L7, and the eighth inductor L8 may all be planar bent inductors. The low-pass filter circuit 320 is designed by using a microstrip structure, so that production cost of the low-pass filter circuit 320 can be reduced. In addition, a circuit structure of the low-pass filter circuit 320 is designed by using an interdigital capacitor and a bent inductor, so that an area occupied by the circuit on the substrate 33 can be greatly reduced, further reducing a circuit size of the radio frequency apparatus 03.

In some embodiments, the low-pass filter circuit 320 and the band-pass filter circuit 310 are sequentially arranged along a first direction Y, and a second direction X intersects the first direction Y. The third inductor L3, the fourth inductor L4, and the fifth inductor L5 are sequentially disposed along the second direction X, and the fifth inductor L5 and the fifth resonance unit 323 are located on a same side of the fourth inductor L4.

Still refer to FIG. 7. In a layout design of the circuit, because the third inductor L3, the fourth inductor L4, and the fifth inductor L5 are all obtained by bending a high-impedance metal wire, the third inductor L3, the fourth inductor L4, and the fifth inductor L5 are sequentially disposed along the second direction X, so that a size of the low-pass filter circuit 320 in the second direction X can be reduced, and the circuit size of the radio frequency apparatus 03 in the second direction X can further be reduced, utilization of an area of the substrate 33 of the radio frequency apparatus can be improved.

In addition, bending degrees of the third inductor L3, the fourth inductor L4, and the fifth inductor L5 may be adjusted based on a circuit function or a circuit layout design requirement. For example, the bending degrees of the third inductor L3, the fourth inductor L4, and the fifth inductor L5 may be adjusted based on layout positions of the first inductor L1 and the second inductor L2 to shorten spacing between the first inductor L1 and the second inductor L2 and a whole formed by the third inductor L3, the fourth inductor L4, and the fifth inductor L5, improving the utilization of the area of the substrate 33, reducing a circuit size of the radio frequency apparatus 03, and further implementing a miniaturization design.

Secondly, in the layout design of the circuit, the fifth inductor L5 and the fifth resonance unit 323 are disposed on a same side of the fourth inductor L4, so that an area occupied by the whole formed by the fifth inductor L5 and the fifth resonance unit 323 on the substrate 33 can be reduced. Specific layout positions may be implemented by adjusting bending degrees of the fifth inductor L5 and the eighth inductor L8 inside and the fifth resonance unit 323.

In some embodiments, the fifth inductor L5 includes a first sub-inductor L51 and a second sub-inductor L52. The first sub-inductor L51 extends along the first direction Y, one terminal of the first sub-inductor L51 is connected to the second terminal of the fourth inductor L4, the second sub-inductor L52 extends along the second direction X, one terminal of the second sub-inductor L52 is connected to the other terminal of the first sub-inductor L51, and the other terminal of the second sub-inductor L52 is connected to the second output port LP. The first sub-inductor L51 and the second sub-inductor L52 enclose a first region A, and at least a part of the fifth resonance unit 323 is located in the first region A.

Still refer to FIG. 7. In a layout design of the circuit, the first sub-inductor L51 and the second sub-inductor L52 of the fifth inductor L5 may enclose the first region A. In this way, at least a part of the fifth resonance unit 323 may be embedded in the first region A to reduce a size in the first direction Y, and reduce a layout area occupied by the fifth inductor L5 and the fifth resonance unit 323 that are combined, further improving the utilization of the area of the substrate 33, reducing a circuit size, and facilitating a miniaturization design of the radio frequency apparatus 03.

In some embodiments, the third inductor L3 includes a third sub-inductor L31 and a fourth sub-inductor L32. The third sub-inductor L31 extends along the first direction Y, and one terminal of the third sub-inductor L31 is connected to the input port CP. The fourth sub-inductor L32 extends along the second direction X, one terminal of the fourth sub-inductor L32 is connected to the other terminal of the third sub-inductor L31, and the other terminal of the fourth sub-inductor L32 is connected to the first terminal of the fourth inductor L4. The third sub-inductor L31, the fourth inductor L4, and the first sub-inductor L51 are sequentially disposed along the first direction Y.

Still refer to FIG. 7. For example, in a layout design of the circuit, the third inductor L3 is bent into an "L" shape, and a sum of widths of the fourth inductor L4 and the first inductor L1 in the first direction Y is less than or equal to a length by which the third sub-inductor L31 extends in the first direction Y, helping provide space for splicing layouts of the fourth inductor L4 and the first inductor L1 in the first direction Y.

In some examples, the fourth inductor L4 uses a snake-shaped bending, and the first terminal of the fourth inductor L4 is used as a start terminal of the snake-shaped bending. The start terminal of the fourth inductor L4 starts to extend along the first direction Y, and a width, in the first direction Y, of a structure formed after three times of bending is greater than a width, in the first direction Y, of a structure formed after subsequent bending. Such arrangement helps shorten spacing between the fourth inductor L4 and the first inductor L1 when the fourth inductor L4 and the first inductor L1 are combined in the first direction Y, reducing a layout area occupied by the fourth inductor L4 and the first inductor L1 that are combined, and further improving the utilization of the area of the substrate 33.

In some embodiments, the fifth inductor L5, the fifth resonance unit 323, and the fourth resonance unit 322 are sequentially disposed along the first direction Y.

Still refer to FIG. 7. In some examples, the fifth resonance unit 323 is disposed within the first region A, so that an overall structure formed thereby, the third inductor L3, and the fourth inductor L4 can be disposed along the second direction X, defining a size occupied by the low-pass filter circuit 320 in the second direction X.

By sequentially disposing the fourth resonance unit 322, the fifth inductor L5, and the fifth resonance unit 323 along the first direction Y, a further increase in the size of the low-pass filter circuit 320 in the second direction X can be avoided, so that the size of the low-pass filter circuit 320 in the second direction X adapts to the size of the band-pass filter circuit 310 in the second direction X, avoiding an increase in a size of the entire radio frequency apparatus 03 in the second direction X, and facilitating a miniaturization design of the radio frequency apparatus 03.

In some embodiments, the third resonance unit 321 and the fourth resonance unit 322 are sequentially disposed along the second direction X. The third inductor L3 and the fourth inductor L4 are located between the third resonance unit 321 and the band-pass filter circuit 310.

Still refer to FIG. 7. In some examples, the third inductor L3, the fourth inductor L4, and the fifth inductor L5 of the low-pass filter circuit 320 are sequentially connected in series between the input port CP and the second output port LP, and a size of the low-pass filter circuit 320 in the second direction X is defined. The third resonance unit 321 and the fourth resonance unit 322 are sequentially arranged along the second direction X, so that an overall size of the third resonance unit 321 and the fourth resonance unit 322 in the first direction Y can be shortened, reducing an overall area occupied by the low-pass filter circuit 320 on the substrate 33, and improving utilization of a layout area of the substrate 33.

In some other examples, the third resonance unit 321 may be an LC series resonance unit. By adjusting a bending degree of the sixth inductor L6 inside the third resonance unit 321, the fourth capacitor C4 and the sixth inductor L6 can also be sequentially disposed along the second direction X, so that a size of the third resonance unit 321 in the first direction Y is shortened, and a layout area occupied on the substrate 33 of the low-pass filter circuit 320 is further reduced, helping further miniaturize the radio frequency apparatus 03.

The following describes a size parameter and a finished product test of the radio frequency apparatus 03 by using a specific embodiment.

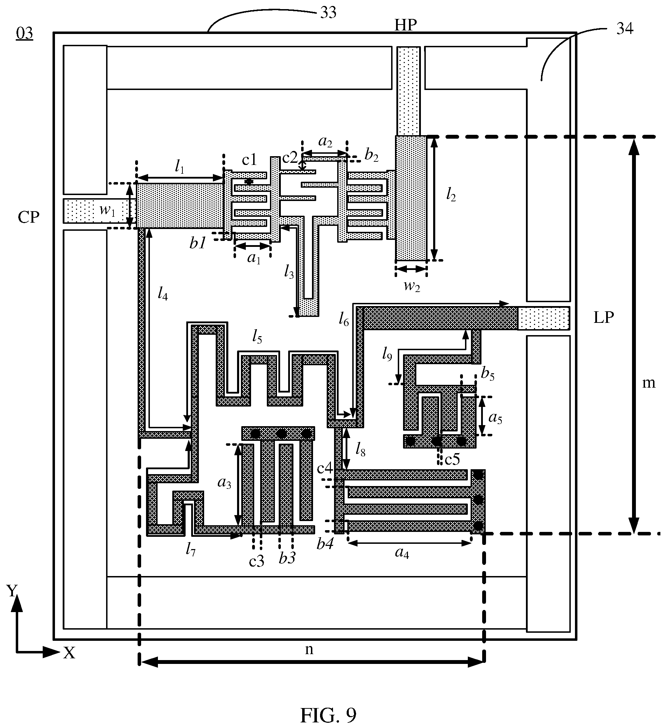

FIG. 9 is a diagram of a structure of still another radio frequency apparatus 03 according to some embodiments of this application. For ease of analyzing and describing performance of the radio frequency apparatus 03, parameter settings in this embodiment are merely example settings, and specific parameters are not limited in this embodiment of this application.

Refer to FIG. 9. In this embodiment of this application, size parameters of the substrate 33 are m = 9.1 mm and n = 8.1 mm. A grounding structure 34 may further be disposed on a periphery of a circuit structure of the radio frequency apparatus 03 to protect an internal circuit structure of the radio frequency apparatus 03 and implement isolation from another component in a communication device 01. For example, the grounding structure 34 may use a microstrip structure. A side of the grounding structure 34 close to an input port CP has a fracture, configured to provide a channel for an external component to connect to the input port CP. Similarly, two sides of the grounding structure 34 that are close to a first output port HP and a second output port LP have fractures, configured to provide channels for the first output port HP and the second output port LP to respectively connect to external circuits.

A high-frequency passband of the band-pass filter circuit 310 is designed to be 5.15 GHz to 5.85 GHz. For example, in the band-pass filter circuit 310, size parameters of a first matching network 313 connected to the input port CP are *l*1 = 2 mm and *w*1 = 1.07 mm; size parameters of a second matching network 314 connected to the first output port HP are *l*2 = 2.95 mm and *w*2 = 0.75 mm; a finger length of a first capacitor C1 is a1 = 0.8 mm, a finger width is b1 = 0.15 mm, and a finger spacing is c1 = 0.2 mm; a finger length of a second capacitor C2 inside a first resonance unit 311 is a2 = 0.9 mm, a finger width is b2 = 0.15 mm, and a finger spacing between two fingers is c2 = 0.125 mm; and a total length of a first inductor L1 is *l*3 = 2.875 mm. Because a second resonance unit 312 and the first resonance unit 311 are symmetrically disposed, a third capacitor C3 and a second inductor L2 inside the second resonance unit 312 have a same size. Details are not described in detail herein again.

A low-frequency passband of a low-pass filter circuit 320 is designed to be 2.4 GHz to 2.5 GHz. For example, in the low-pass filter circuit 320, a total length of a third inductor L3 is *l*4 = 5.95 mm, a total length of a fourth inductor L4 is *l*5 = 11.65 mm, and a total length of a fifth inductor L5 is *l*6 = 3.36 mm. A circuit size is reduced by properly bending a shape of an inductor. A total length of a sixth inductor inside the third resonance unit 321 is *l*7 = 6.85 mm, a finger length of a fourth capacitor is a3 = 1.9 mm, a finger width is b3 = 0.25 mm, and a finger spacing between two fingers is c3 = 0.15 mm; a total length of a seventh inductor inside a fourth resonance unit 322 is *l*8 = 1 mm, a finger length of a fifth capacitor is a4 = 2.9 mm, a finger width is b4 = 0.25 mm, and a finger spacing between two fingers is c4 = 0.15 mm; and a total length of an eighth inductor inside a fifth resonance unit 323 is *l*9 = 2.9 mm, a finger length of a sixth capacitor is a5 = 0.88 mm, a finger width is b5 = 0.35 mm, and a finger spacing between two fingers is c5 = 0.1 mm.

When the radio frequency apparatus 03 works, and radio frequency signals received by the input port CP pass through the band-pass filter circuit 310, signals whose frequency bands are 2.4 GHz to 2.5 GHz and 10 GHz to 12 GHz among the radio frequency signals are suppressed by the first resonance unit 311 and the second resonance unit 312 in the band-pass filter circuit 310, and a second harmonic signal whose frequency band is 10 GHz to 15 GHz among the radio frequency signals is suppressed by parallel resonance generated by the first capacitor C1 in the band-pass filter circuit 310. Finally, a radio frequency signal whose frequency band is 5.15 GHz to 5.85 GHz passes through, and is transmitted to a subsequently electrically connected radio frequency circuit by using the first output port HP.

When the radio signals pass through the low-pass filter circuit 320, the third inductor L3, the fourth inductor L4, and the fifth inductor L5 that are connected in series may generate a low-pass response to allow a low-frequency signal whose frequency band is 2.4 GHz to 2.5 GHz to pass through, and suppress another signal whose frequency band is higher than the frequency band. The series resonance generated by the third resonance unit 321, the fourth resonance unit 322, and the fifth resonance unit 323 in the low-pass filter circuit 320 further suppresses signals having a same resonance frequency as that of the resonance units among the radio frequency signals, improving precision that a low-frequency signal output by the low-pass filter circuit 320 corresponds to a target frequency band, improving in-band matching and out-of-band suppression capabilities of the radio frequency apparatus 03, and reducing insertion loss of the radio frequency apparatus 03.

In some other examples, target frequency bands allowed by the band-pass filter circuit 310 and the low-pass filter circuit 320 may be changed based on a requirement, and a design parameter of a circuit component may be correspondingly adjusted.

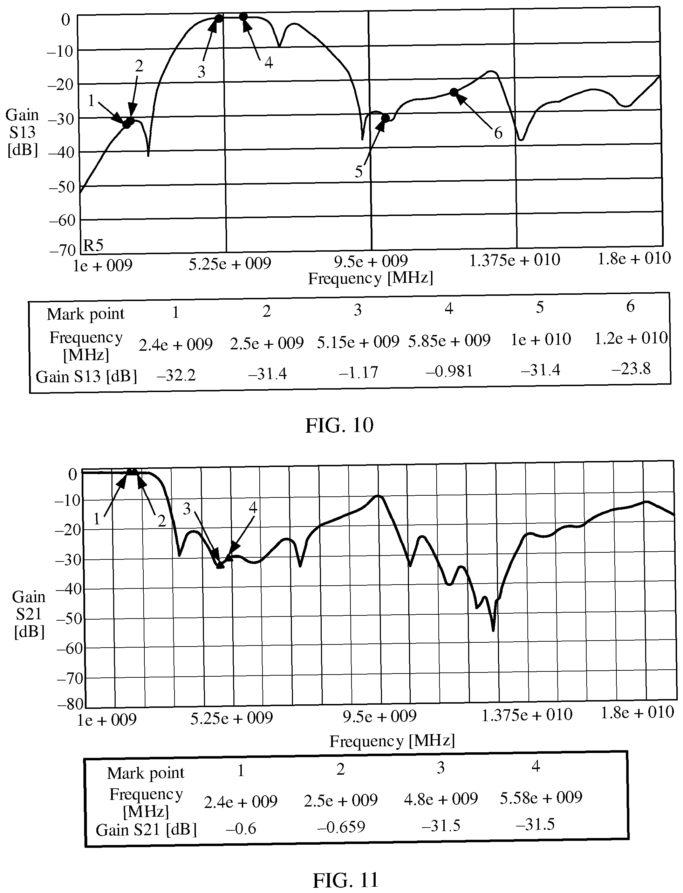

FIG. 10 is a test curve diagram of a band-pass filter circuit 310 in a radio frequency apparatus 03 according to some embodiments of this application.

FIG. 10 is the test curve diagram of the band-pass filter circuit 310 in the radio frequency apparatus 03, a horizontal coordinate is a frequency, and a vertical coordinate is a gain. Six points are marked in the test curve diagram. The following analyzes performance of the band-pass filter circuit 310 in the radio frequency apparatus 03 based on values of the six mark points. The mark point 3 and the mark point 4 are in-band mark points, and the mark points 1 and 2 and the mark points 5 and 6 are out-of-band mark points. A test result S13 is insertion loss.

For example, the mark point 1 corresponds to a frequency 2.4 GHz, the mark point 2 corresponds to a frequency 2.5 GHz, the mark point 3 corresponds to a frequency 5.15 GHz, the mark point 4 corresponds to a frequency 5.85 GHz, the mark point 5 corresponds to a frequency 10 GHz, and the mark point 6 corresponds to a frequency 12 GHz. According to parameter values of S13 corresponding to the mark point 1 to the mark point 6 shown in the test curve diagram, it can be obtained through analysis that when the band-pass filter circuit 310 of the radio frequency apparatus 03 in this embodiment of this application works, insertion losses of the mark points 3 and 4 in the in-band are low, and insertion losses corresponding to the mark points 1 and 2 and the mark points 5 and 6 in the out-of-band are large.

Therefore, it can be concluded that in the band-pass filter circuit 310, insertion loss of a mark point in the band-pass target frequency band is low, and insertion loss of a mark point outside the band-pass target frequency band is large. That is, the band-pass filter circuit 310 has good in-band matching performance, and a radio frequency signal meeting the band-pass target frequency band has low attenuation. In addition, the band-pass filter circuit 310 has a strong suppression capability for an out-of-band signal. That is, the band-pass filter circuit 310 has a very strong in-band matching capability and out-of-band suppression capability.

FIG. 11 is a test curve diagram of a low-pass filter circuit 320 in a radio frequency apparatus 03 according to some embodiments of this application.

FIG. 11 is the test curve diagram of the low-pass filter circuit 320 in the radio frequency apparatus 03, a horizontal coordinate is a frequency, and a vertical coordinate is a gain. Four points are marked in the test curve diagram. The following analyzes performance of the radio frequency apparatus 03 based on values of the four mark points. The mark point 1 and the mark point 2 are in-band mark points, and the mark point 3 and the mark point 4 are out-of-band mark points. A test result S21 is insertion loss.

For example, the mark point 1 corresponds to a frequency 2.4 GHz, the mark point 2 corresponds to a frequency 2.5 GHz, the mark point 3 corresponds to a frequency 4.8 GHz, and the mark point 4 corresponds to a frequency 5.58 GHz. According to parameter values of S21 corresponding to the mark point 1 to the mark point 4 shown in the test curve diagram, it can be obtained through analysis that when the low-pass filter circuit 320 of the radio frequency apparatus 03 in this embodiment of this application works, insertion losses of the mark points 1 and 2 in the in-band are low, and insertion losses corresponding to the mark points 3 and 4 in the out-of-band are large.

Therefore, it can be concluded that in the low-pass filter circuit 320, insertion loss of a mark point in the low-pass target frequency band is low, and insertion loss of a mark point outside the low-pass target frequency band is large. That is, the low-pass filter circuit 320 has good in-band matching performance, and a radio frequency signal meeting the low-pass target frequency band has low attenuation. In addition, the low-pass filter circuit 320 has a strong suppression capability for an out-of-band signal. That is, the radio frequency apparatus 03 has a very strong in-band matching capability and out-of-band suppression capability.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A radio frequency apparatus, comprising a substrate and a band-pass filter circuit, a low-pass filter circuit, an input port, a first output port, and a second output port that are disposed on the substrate, wherein
the low-pass filter circuit is electrically connected between the input port and the second output port;
the band-pass filter circuit comprises: a first resonance unit, a second resonance unit, and a first capacitor;
the first resonance unit comprises a second capacitor and a first inductor, a first terminal of the second capacitor is electrically connected to the input port, and a second terminal of the second capacitor is electrically connected to a first terminal of the first inductor;
the second resonance unit comprises a third capacitor and a second inductor, a first terminal of the third capacitor is electrically connected to the first output port, a second terminal of the third capacitor is electrically connected to a first terminal of the second inductor, and a second terminal of the second inductor is electrically connected to a second terminal of the first inductor; and
the first capacitor is electrically connected between the second terminal of the second capacitor and the second terminal of the third capacitor.

2. The radio frequency apparatus according to claim 1, wherein
the low-pass filter circuit and the band-pass filter circuit are sequentially arranged along a first direction, and a second direction intersects the first direction; and
the second capacitor, the first capacitor, and the third capacitor are sequentially disposed along the second direction.

3. The radio frequency apparatus according to claim 1 or 2, wherein
the first inductor and the second inductor are located on a side of the first capacitor close to the low-pass filter circuit.

4. The radio frequency apparatus according to any one of claims 1 to 3, wherein the band-pass filter circuit further comprises a first matching network and a second matching network;
the first matching network is electrically connected between the input port and the first terminal of the second capacitor, the second matching network is electrically connected between the second terminal of the third capacitor and the first output port, the first matching network and the second matching network each comprise a rectangular conductor block, a width of the first matching network in the first direction is less than a width of the first matching network in the second direction, and a width of the second matching network in the first direction is greater than a width of the second matching network in the second direction; and
the first direction is an arrangement direction of the low-pass filter circuit and the band-pass filter circuit, and the second direction intersects the first direction.

5. The radio frequency apparatus according to any one of claims 1 to 4, wherein the low-pass filter circuit comprises: a third resonance unit, a fourth resonance unit, a fifth resonance unit, a third inductor, a fourth inductor, and a fifth inductor; and
a first terminal of the third inductor is electrically connected to the input port, a second terminal of the third inductor is electrically connected to a first terminal of the fourth inductor, a second terminal of the fourth inductor is electrically connected to a first terminal of the fifth inductor, a second terminal of the fifth inductor is electrically connected to the second output port, the third resonance unit is electrically connected to the second terminal of the third inductor, the fourth resonance unit is electrically connected to the second terminal of the fourth inductor, and the fifth resonance unit is electrically connected to the second terminal of the fifth inductor.

6. The radio frequency apparatus according to claim 5, wherein
the low-pass filter circuit and the band-pass filter circuit are sequentially arranged along the first direction, and the second direction intersects the first direction; and
the third inductor, the fourth inductor, and the fifth inductor are sequentially disposed along the second direction, and the fifth inductor and the fifth resonance unit are located on a same side of the fourth inductor.

7. The radio frequency apparatus according to claim 6, wherein
the fifth inductor comprises a first sub-inductor and a second sub-inductor, the first sub-inductor extends along the first direction, one terminal of the first sub-inductor is connected to the second terminal of the fourth inductor, the second sub-inductor extends along the second direction, one terminal of the second sub-inductor is connected to the other terminal of the first sub-inductor, the other terminal of the second sub-inductor is connected to the second output port, the first sub-inductor and the second sub-inductor enclose a first region, and at least a part of the third resonance unit is located in the first region.

8. The radio frequency apparatus according to claim 7, wherein
the third inductor comprises a third sub-inductor and a fourth sub-inductor;
the third sub-inductor extends along the first direction, and one terminal of the third sub-inductor is connected to the input port;
the fourth sub-inductor extends along the second direction, one terminal of the fourth sub-inductor is connected to the other terminal of the third sub-inductor, and the other terminal of the fourth sub-inductor is connected to the first terminal of the fourth inductor; and
the third sub-inductor, the fourth inductor, and the first sub-inductor are sequentially disposed along the first direction.

9. The radio frequency apparatus according to any one of claims 6 to 8, wherein
the fifth inductor, the third resonance unit, and the second resonance unit are sequentially disposed along the first direction.

10. The radio frequency apparatus according to claim 8, wherein
the first resonance unit and the second resonance unit are sequentially disposed along the second direction; and
the third inductor and the fourth inductor are located between the first resonance unit and the band-pass filter circuit.

11. A communication device, comprising: a mainboard and the radio frequency apparatus according to any one of claims 1 to 10, wherein
the mainboard is connected to the radio frequency apparatus.
